# FASCICULE DE BREVET EUROPEEN

(11) **EP 2 537 754 B1**
(45) Date de publication et mention de la délivrance du brevet: **10.06.2015**
(21) Numéro de dépôt: 12305689.7
(22) Date de dépôt: 18.06.2012
(51) Int. Cl.: B64D 15/12, B64D 33/02, F02C 7/045

(54) **Procédé de réalisation d'un panneau pour le traitement acoustique integrant des canaux juxtaposes a une structure alveolaire**
Verfahren zur Herstellung eines Paneels zur Lärmdämmung, das neben einer Wabenstuktur liegende Kanäle umfasst
Method for producing an acoustic treatment panel including channels adjacent to a cellular structure

(30) Priorité: 20.06.2011 FR 1155383
(43) Date de publication de la demande: 26.12.2012
(73) Titulaire: Airbus Opérations SAS, 31060 Toulouse (FR)
(72) Inventeur: Porte, Alain, 31770 Colomiers (FR); Chelin, Frédéric, 32430 Encausse (FR)
(74) Mandataire: Fantin, Laurent

(56) Documents cités:
- FR-A1- 2 917 067
- FR-A1- 2 952 032
- US-A1- 2011 139 927

## Description

La présente invention se rapporte à un procédé de réalisation d'un panneau pour le traitement acoustique intégrant des canaux juxtaposés à une structure alvéolaire. Les canaux sont notamment destinés à de l'air chaud prévu pour le traitement du givre, ledit panneau étant apte à être disposé au niveau d'une entrée d'air d'une nacelle d'aéronef.

Un tel panneau est notamment décrit dans le brevet FR-2.917.067. Il comprend de l'extérieur vers l'intérieur une couche acoustiquement résistive, au moins une structure alvéolaire et une couche réflectrice, ainsi que des canaux délimités chacun par une paroi intercalée entre la couche acoustiquement résistive et la structure alvéolaire.

Cette solution permet de limiter les risques de communication entre l'intérieur des canaux et les cellules de la structure alvéolaire, et donc les risques de perturbation du traitement acoustique.

Selon un autre avantage, l'air chaud occupe un volume nettement inférieur par rapport aux solutions antérieures selon lesquelles il occupe le volume de certaines cellules de la structure alvéolaire, ce qui permet d'obtenir d'une part une meilleure concentration de l'air chaud contre la paroi à dégivrer renforçant l'efficacité du dégivrage, et d'autre part, une pression pneumatique plus élevée limitant le risque d'une pression à l'intérieur de la structure inférieure à celle de l'extérieur et donc la pénétration de l'air extérieur à l'intérieur du système de dégivrage.

Selon un autre avantage, l'air chaud est en contact permanent avec la peau à dégivrer, ce qui permet d'améliorer les échanges et de réduire la température de l'air chaud refoulé en sortie du système de dégivrage, et ainsi de le rejeter sans risque de brûlures de la paroi traversée, notamment lorsque cette dernière est réalisée en un matériau sensible à la chaleur tel que le composite.

Selon un premier mode de réalisation décrit dans le brevet FR-2.917.067, la couche acoustiquement résistive se présente sous la forme d'une première tôle. Pour former les canaux, une seconde tôle est mise en forme de manière à obtenir des sillons puis elle est plaquée et solidarisée à la surface intérieure de la première tôle. En suivant, on réalise des perforations dans les deux tôles au niveau des zones où elles sont en contact. En parallèle, une première face de la structure alvéolaire est solidarisée à la couche réflectrice. L'autre face de la structure alvéolaire est découpée de manière à former au niveau de ladite face des formes complémentaires à celles des canaux. En suivant, la structure alvéolaire est solidarisée à la seconde couche délimitant les canaux.

Ce mode opératoire permet de simplifier le mode d'assemblage car les parois délimitant tous les canaux sont reliées entre elles et découlent de la mise en forme d'une seule tôle.

Toutefois, la superposition de deux tôles au niveau des perforations conduit à avoir des perforations avec une longueur relativement importante qui impacte le fonctionnement du traitement acoustique et le rend moins performant.

Selon un autre mode opératoire décrit dans le brevet FR-2.917.067, chaque canal se présente sous la forme d'une bande de matière mise en forme. Selon cette variante, les bandes de matière délimitant les canaux sont plaquées et solidarisées individuellement à la surface intérieure de la première tôle.

Pour assurer le passage des ondes sonores, la couche acoustiquement résistive peut comprendre un tissu métallique ou non tel qu'un Wiremesh et au moins une couche structurale par exemple une tôle métallique ou composite avec des trous oblongs ou des microperforations.

En parallèle, une première face de la structure alvéolaire est solidarisée à la couche réflectrice. L'autre face de la structure alvéolaire est découpée de manière à former au niveau de ladite face des formes complémentaires à celles des canaux. En suivant, la structure alvéolaire est solidarisée à la seconde couche délimitant les canaux.

Ce mode opératoire n'impacte pas le fonctionnement du traitement acoustique dans la mesure où les bandes utilisées pour former les canaux dégagent la couche acoustiquement résistive dans les zones prévues pour le traitement acoustique. Toutefois, la mise en place des bandes de matière délimitant les canaux sur la couche acoustiquement résistive est relativement longue à réaliser, d'autant plus que la liaison entre les bords des bandes et la couche acoustiquement résistive doit être étanche pour ne pas perturber les traitements acoustique et/ou du givre.

Selon les deux modes opératoires présentés dans le brevet FR-2.917.067, il est difficile d'obtenir une étanchéité satisfaisante entre les conduits de la structure alvéolaire qui débouchent au droit des canaux du fait qu'il est relativement difficile de souder les extrémités des conduits avec une surface non plane et de forme complexe.

Aussi, la présente demande vise à pallier les inconvénients de l'art antérieur en proposant un procédé de réalisation d'un panneau pour le traitement acoustique intégrant des canaux juxtaposés à une structure alvéolaire permettant d'obtenir un panneau performant tant sur le plan du traitement acoustique que du traitement du givre.

A cet effet, l'invention a pour objet un procédé de réalisation d'un panneau pour le traitement acoustique comprenant une couche acoustiquement résistive, au moins une structure alvéolaire et une couche réflectrice, ainsi qu'au moins un canal délimité au moins en partie par une paroi sécante avec au moins une paroi d'une cellule de la structure alvéolaire, **caractérisé en ce qu'**il consiste à élever la température de la paroi et des extrémités des cellules de la structure alvéolaire et à injecter un gaz sous pression dans le canal afin d'expanser la paroi du canal afin de la plaquer contre les extrémités des cellules de la structure alvéolaire de manière à obtenir une soudure par diffusion continue entre les extrémités des parois des cellules de la structure alvéolaire et la paroi du canal.

D'autres caractéristiques et avantages ressortiront de la description qui va suivre de l'invention, description donnée à titre d'exemple uniquement, en regard des dessins annexés sur lesquels :
- la figure 1 est une coupe d'une partie d'une entrée d'air d'une nacelle d"un aéronef incorporant un panneau pour le traitement acoustique intégrant la fonction du traitement du givre,
- la figure 2 est une vue en perspective d'une partie d'un panneau pour le traitement acoustique intégrant la fonction du traitement du givre,
- les figures 3A à 3D sont des coupes illustrant les étapes d'un procédé de réalisation d'un panneau pour le traitement acoustique intégrant la fonction du traitement du givre selon l'invention,
- la figure 4A est une coupe illustrant une première phase de l'étape d'assemblage d'un panneau selon l'invention,
- la figure 4B est une coupe illustrant un détail de la figure 4A,
- la figure 5A est une coupe illustrant une deuxième phase de l'étape d'assemblage d'un panneau selon l'invention,
- la figure 5B est une coupe illustrant un détail de la figure 5A, et
- les figures 6 et 7 sont des coupes illustrant des variantes de l'invention.

La présente invention est maintenant décrite appliquée à une entrée d'air d'un ensemble propulsif d'un aéronef. Cependant, elle peut s'appliquer au niveau des différents bords d'attaque d'un aéronef au niveau desquels un traitement acoustique et un traitement du givre sont combinés, par exemple le bord d'attaque des ailes.

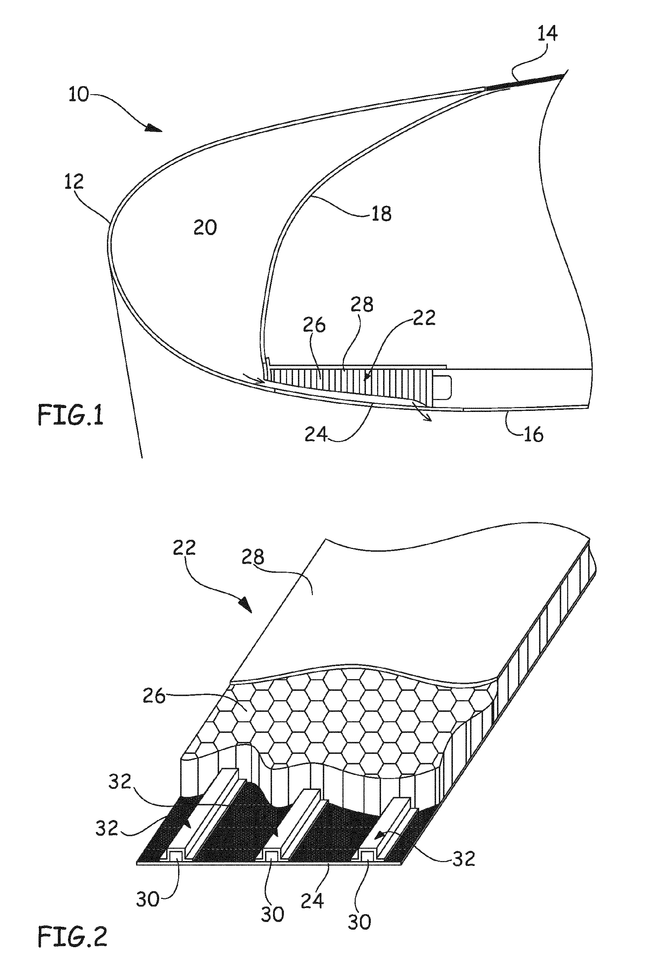

Comme illustré sur la figure 1, une entrée d'air 10 d'une nacelle d'aéronef comprend à l'avant une lèvre 12 dont une première extrémité est prolongée vers l'arrière par une paroi extérieure 14 et dont l'autre extrémité est prolongée par un conduit 16 apte à canaliser un flux d'air en direction de la motorisation. Un cadre avant 18 relie la paroi extérieure 14 et le conduit 16 et délimite avec la lèvre 12 un conduit annulaire 20.

Pour limiter l'impact des nuisances sonores, un panneau 22 visant à absorber une partie de l'énergie sonore, notamment en utilisant le principe des résonateurs d'Helmholtz est prévu notamment au niveau des surfaces aérodynamiques. De manière connue, ce panneau pour le traitement acoustique, également appelé revêtement acoustique, comprend de l'extérieur vers l'intérieur une structure acoustiquement résistive 24, au moins une structure alvéolaire 26 et une couche réflectrice 28.

Par couche ou structure, on entend une ou plusieurs couches de même nature ou non.

La structure acoustiquement résistive 24 est une structure poreuse ayant un rôle dissipatif, transformant partiellement l'énergie acoustique de l'onde sonore la traversant en chaleur.

Selon un mode de réalisation, la structure acoustiquement résistive 24 comprend au moins une couche poreuse sous la forme par exemple d'un tissu métallique ou non tel qu'un Wiremesh et au moins une couche structurale par exemple une tôle métallique ou composite avec des trous oblongs ou des micro perforations.

Dans tous les cas, la couche acoustiquement résistive 24 comprend des ouvertures permettant aux ondes acoustiques de la traverser.

La structure réflectrice 28 est imperméable aux ondes sonores.

La structure alvéolaire 26 correspond à un volume délimité par d'une part une première surface imaginaire sur laquelle peut être rapportée la couche réflectrice 28, et d'autre part, une seconde surface imaginaire sur laquelle peut être rapportée la couche acoustiquement résistive 24.

La distance séparant la première surface imaginaire et la seconde surface imaginaire peut ne pas être constante.

La structure alvéolaire 26 comprend une pluralité de conduits débouchant d'une part au niveau de la première surface, et d'autre part, au niveau de la seconde surface. Ces conduits sont obturés par d'une part la structure poreuse acoustiquement résistive 24, et d'autre part, la couche réflectrice 28 de manière à former chacun une cellule.

De préférence, deux conduits adjacents sont séparés par une paroi latérale. Selon un mode de réalisation, la structure alvéolaire 26 est constituée d'un nid d'abeilles. Ainsi, les conduits ont une forme hexagonale et les conduits adjacents sont séparés par des parois latérales.

En variante, les conduits de la structure alvéolaire peuvent avoir d'autres formes, par exemple avoir une section carrée.

Ces différentes couches et structures ne sont pas plus décrites car elles sont connues de l'homme du métier.

Pour limiter la formation du givre ou éviter son accumulation, l'entrée d'air 10 peut comprendre des moyens pour traiter le givre, utilisant de l'air chaud prélevé au niveau du moteur pour réchauffer la surface aérodynamique. Pour la suite de la description, on entend par givre aussi bien le givre que la glace, de toutes natures, de toutes structures et de toutes les épaisseurs.

Dans le cas d'une entrée d'air incorporant un traitement du givre avec de l'air chaud, un panneau 22 conçu selon l'invention peut être disposé au niveau de la lèvre, plus particulièrement dans le conduit annulaire 20 à l'avant du cadre avant 18, ou être placé au niveau du conduit 16, à l'arrière du cadre avant 18.

Selon l'invention, le panneau pour le acoustique 22 comprend au moins un conduit ou canal 30 sécant avec les parois des cellules de la structure alvéolaire 26, le canal 30 étant délimité par une paroi 32 distincte des parois de la structure alvéolaire 26.

L'invention est maintenant décrite appliquée à un panneau combinant les fonctions de traitements acoustique et du givre dans lequel des canaux 30 sont intercalés entre la structure alvéolaire 26 et la structure acoustiquement résistive 24 et sont utilisés pour véhiculer de l'air chaud pour le traitement du givre. A cet effet, une des extrémités des canaux 30 est reliée à une arrivée d'air chaud.

Cependant, l'invention n'est pas limitée à cette application. Ainsi, les canaux peuvent être utilisés pour véhiculer tout type de fluide ou d'éléments et être disposés accolés à la couche acoustiquement résistive 24 et/ou à la couche réflectrice 28 ou distants desdites couches 24 et 28.

Sur les différentes figures, le panneau 24 est représenté selon une coupe transversale à la direction des canaux 30. Selon un agencement, les canaux 30 s'étendent selon la direction longitudinale de la nacelle.

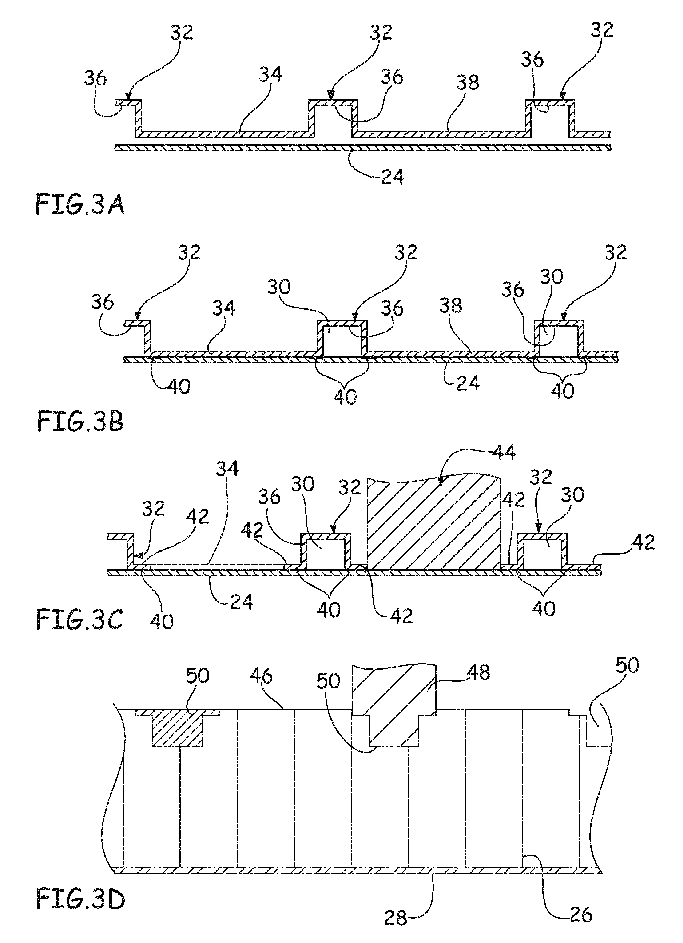

Selon un mode de réalisation, les canaux 30 sont obtenus par la mise en forme d'une couche 34 afin d'obtenir au niveau d'une de ses faces des formes en creux formant des sillons 36 de manière à délimiter une partie des canaux 30, comme illustré sur la figure 3A. Les sillons peuvent être rectilignes ou non et avoir des sections constantes ou variables sur leurs longueurs.

De préférence, la couche 34 est une tôle métallique 38, en alliage de titane par exemple.

Pour obtenir les formes en créneau, la tôle 38 est mise en forme en utilisant de préférence une technique de formage superplastique. En variante, la tôle 38 peut être mise en forme par toute autre technique de formage.

En suivant, la couche 34 avec les sillons 36 est plaquée et solidarisée à la face intérieure de la couche acoustiquement résistive 24 de manière à obtenir les canaux 30, comme illustré sur la figure 3B.

La technique utilisée pour assurer la liaison entre la couche 34 et la couche acoustiquement résistive 24 dépend essentiellement des matériaux des deux couches 34 et 24.

Selon un mode de réalisation, on peut utiliser une technique de soudage, notamment par ultrasons. Toutefois, d'autres techniques pour assurer l'assemblage des deux couches 24 et 34 peuvent être utilisées, comme par exemple le collage.

Quelle que soit la technique utilisée, il est important que les bords 40 venant de part et d'autre des sillons 36 de la couche 34 soient tous les deux solidarisés à la couche 24 par une ligne continue de manière à assurer une étanchéité satisfaisante entre les canaux 30 et le reste du panneau 22.

En suivant, on effectue un retrait de matière de manière à supprimer au moins une partie de l'épaisseur de la couche 34 entre les canaux 30. Selon une première variante illustrée sur la figure 3C, entre les canaux, toute l'épaisseur de la couche 34 est retirée et l'épaisseur de matière susceptible d'être traversée par les ondes acoustiques est égale à l'épaisseur de la couche acoustiquement résistive qui est dimensionnée de manière optimale pour le traitement acoustique. De plus, le fait que les parois 32 délimitant les canaux soient liées et issues d'une même couche 34 permet de simplifier l'assemblage des éléments délimitant lesdits canaux.

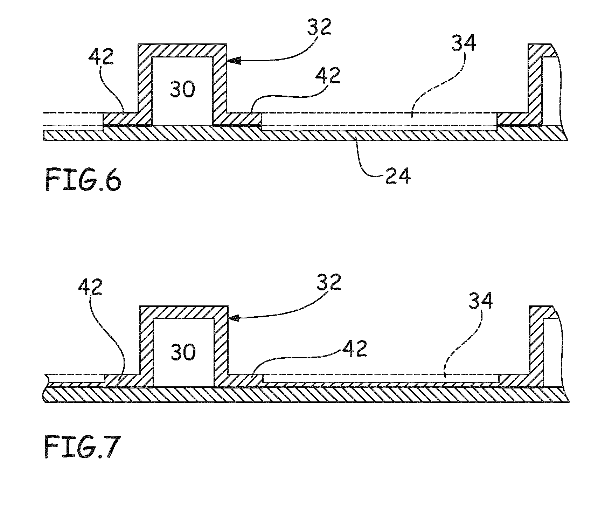

Selon une autre variante illustrée sur la figure 6, entre les canaux, toute l'épaisseur de la couche 34 et une faible épaisseur de la couche 24, de préférence moins de 25%, sont retirées. Dans ce cas, l'épaisseur de matière susceptible d'être traversée par les ondes acoustiques est légèrement inférieure à l'épaisseur de la couche acoustiquement résistive.

Selon une autre variante illustrée sur la figure 7, entre les canaux, seulement une partie de l'épaisseur de la couche 34, de préférence plus de 75%, est retirée. Dans ce cas, l'épaisseur de matière susceptible d'être traversée par les ondes acoustiques est légèrement supérieure à l'épaisseur de la couche acoustiquement résistive.

De préférence, pour chaque canaux, on conserve deux pattes 42 sensiblement parallèles à la couche 24 de part et d'autre des sillons 36 afin que pour chaque canal, la liaison entre le restant de la couche 34 et la couche acoustiquement résistive 24 soit résistante et étanche. Avantageusement, les pattes 42 ont une longueur comprise entre 2 et 10 mm pour obtenir un bon compromis entre une liaison résistante et étanche tout en conservant le maximum de surface fonctionnelle sur le plan acoustique.

Le retrait de matière peut se faire par tous moyens appropriés, notamment par jet d'eau par exemple. Sur la figure 3C, on a représenté de manière schématique en 44 les moyens pour retirer la matière.

Selon les variantes, les ouvertures permettant aux ondes de traverser la couche acoustiquement résistive peuvent être réalisées dans ladite couche acoustiquement résistive 24 avant l'assemblage avec la couche 34, être réalisées dans les couches 24 et 34 après l'assemblage mais avant le retrait de matière ou être réalisées dans ladite couche acoustiquement résistive 24 après l'assemblage et le retrait de matière.

En variante, les canaux 30 pourraient être réalisés de la même manière que dans le brevet FR-2.917.067.

En parallèle, la structure alvéolaire 26 et la couche réflectrice 28 sont assemblées et on réalise un retrait de matière au niveau de la face 46 de la structure alvéolaire 26 susceptible d'être plaquée contre la couche acoustiquement résistive 24, comme illustré sur la figure 3D. Sur cette figure, on a représenté de manière schématique en 48 les moyens pour retirer la matière, comme par exemple une fraise. L'étape d'assemblage et les moyens utilisés pour retirer la matière ne sont pas plus détaillés car ils sont connus de l'homme du métier.

Après cette étape, la face 46 comprend des découpes 50 aptes à recevoir chacune un canal 30.

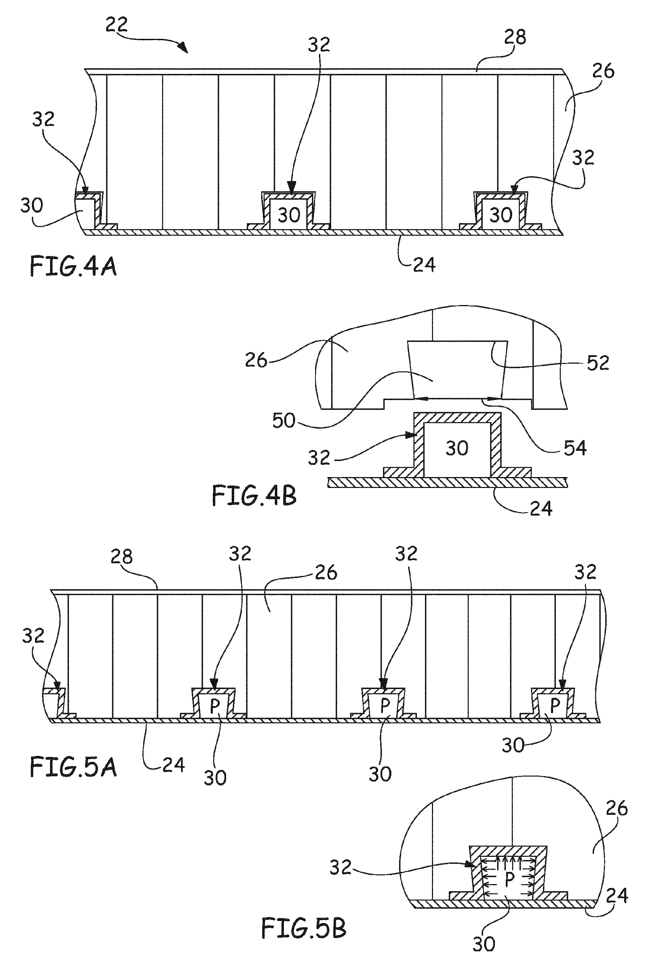

Comme illustré sur la figure 4A, la face 46 de la structure alvéolaire 26 est plaquée contre la face intérieure de la couche acoustiquement résistive 24. Préalablement à cette étape d'accostage, les pièces sont préparées pour subir une étape de soudage par diffusion, par exemple grâce à un décapage chimique. Après cette étape d'accostage, selon l'invention, on procède à l'assemblage de la structure alvéolaire avec l'ensemble formé par la couche acoustiquement résistive 24 et les canaux 30 grâce à une technique de soudage par diffusion.

A cet effet, au moins les zones à assembler à savoir les extrémités des cellules de la structure alvéolaire 26, les parois 32 délimitant les canaux 30 et avantageusement la couche acoustiquement résistive, sont portées à une température supérieure à un seuil donné. De manière concomitante, on injecte un gaz sous pression dans les canaux 30 visant à obtenir une expansion des parois 32 des canaux afin de les plaquer contre les extrémités des cellules de la structure alvéolaire 26, comme illustré sur les figures 5A et 5B. Avantageusement, on exerce simultanément un effort de pression visant à plaquer la couche acoustiquement résistive 24 contre la face 46 de la structure alvéolaire 26.

La combinaison de l'élévation de température et de pression conduit à obtenir une soudure continue au niveau des extrémités des cellules de la structure alvéolaire qui sont ainsi étanches entre elles.

Bien entendu, la température seuil et les pressions minimales dépendent des matériaux utilisés et plus particulièrement de leurs caractéristiques rhéologiques relatives à la superplasticité.

A titre d'exemple, pour des éléments à base d'alliage de titane, la température doit atteindre au niveau des zones de soudage 900°C.

Selon un autre avantage, cette solution permet de compenser les défauts géométriques des découpes 50 et des parois 32 délimitant les canaux 30. En effet, la paroi 32 peut s'expanser de manière différente d'un point à l'autre jusqu'à venir en contact avec les extrémités des cellules de la structure alvéolaire.

Avantageusement, chaque découpe 50 a une forme en contre dépouille comme illustré sur les figures 4A et 4B. Chaque découpe 50 comprend une section avec un fond 52 et une embouchure 54 via laquelle est introduit un canal 30.

Selon un mode de réalisation illustré, la découpe 50 a une forme en queue d'aronde. Toutefois, la plus grande largeur de la découpe n'est pas nécessairement prévue au niveau du fond.

Selon cette variante, lors de la phase d'assemblage, on réalise en même temps une déformation selon une technique de formage à chaud superplastique et un soudage par diffusion.

Ainsi lors de l'assemblage, les parois 32 des canaux 30 qui n'ont pas nécessairement une forme en contre dépouille initialement, s'expanse de manière à épouser les formes des découpes 50. Ainsi, après l'assemblage, les parois 32 des canaux 30 ont des formes en contre dépouille qui empêchent tout retrait des canaux des découpes ce qui contribue à obtenir une liaison résistante entre la couche acoustiquement résistive 24 et la structure alvéolaire 26.

Selon une autre application, les canaux pourraient être intercalés entre la couche réflectrice et la structure alvéolaire. Dans ce cas, les canaux peuvent être réalisés à partir d'une couche unique avec des sillons comme précédemment solidarisée à la couche réflectrice ou à partir de bandes de matière comme illustré dans le brevet FR-2.917.067 solidarisées à la couche réflectrice. Dans ce cas, la face de la structure alvéolaire plaquée contre la couche réflectrice comprend des découpes 50 analogues à celles de la face 46 dans l'exemple précédent. En suivant, l'ensemble couche réflectrice/canaux est assemblé à la structure alvéolaire de la même manière que l'ensemble couche acoustiquement résistive/canaux dans l'exemple précédent.

Selon une autre application, les canaux pourraient être délimités par une paroi avec une section fermée à la manière d'un tube. Dans ce cas, la structure alvéolaire comprend pour chaque canal une découpe permettant de le loger. Quelle que soit la variante, le panneau comprend au moins un canal délimité au moins en partie par une paroi sécante avec au moins une paroi d'une cellule de la structure alvéolaire. La structure alvéolaire comprend au moins une découpe permettant de loger le canal.

La paroi du canal est réalisée en un matériau ayant des caractéristiques rhéologiques relatives à la superplasticité adaptées pour subir un formage à chaud superplastique et un soudage par diffusion.

Avantageusement, la paroi du canal est réalisée à partir d'un alliage de titane.

Pour assurer un assemblage entre la structure alvéolaire et la paroi d'un canal permettant d'obtenir une liaison étanche, au moins les zones à assembler à savoir les extrémités des cellules de la structure alvéolaire en contact avec la paroi du canal, la paroi du canal sont portées à une température supérieure à un seuil donné. De manière concomitante, on injecte un gaz sous pression dans le canal visant à obtenir une expansion de la paroi du canal afin de la plaquer contre les extrémités des cellules de la structure alvéolaire.

La combinaison de l'élévation de température et de pression conduit à obtenir une soudure continue au niveau des extrémités des cellules de la structure alvéolaire qui sont ainsi étanches entre elles.

Bien entendu, la température seuil et les pressions minimales dépendent des matériaux utilisés et plus particulièrement de leurs caractéristiques rhéologiques relatives à la superplasticité.

De préférence, lorsque la découpe réalisée dans la structure alvéolaire est disposée au niveau d'une des faces de la structure alvéolaire plaquée contre la couche acoustiquement résistive ou la couche réflectrice, la découpe a une forme en contre dépouille. Ainsi lors de l'assemblage, la paroi du canal qui n'a pas nécessairement une forme en contre dépouille initialement, s'expanse de manière à épouser les formes de la découpe 50. Ainsi, après l'assemblage, la paroi du canal a une forme en contre dépouille qui empêche tout retrait du canal de la découpe.

## Revendications

1. Procédé de réalisation d'un panneau pour le traitement acoustique comprenant une couche acoustiquement résistive (24), au moins une structure alvéolaire (26) et une couche réflectrice (28), ainsi qu'au moins un canal délimité au moins en partie par une paroi (32) sécante avec au moins une paroi d'une cellule de la structure alvéolaire (26), **caractérisé en ce qu'**il consiste à élever la température de la paroi (32) et des extrémités des cellules de la structure alvéolaire (26) et à injecter un gaz sous pression dans le canal (30) afin d'expanser la paroi (32) du canal afin de la plaquer contre les extrémités des cellules de la structure alvéolaire (26) de manière à obtenir une soudure par diffusion continue entre les extrémités des parois des cellules de la structure alvéolaire (26) et la paroi (32) du canal (30).

2. Procédé selon la revendication 1, **caractérisé en ce que** la paroi (32) est en un matériau ayant des caractéristiques rhéologiques relatives à la superplasticité adaptées pour subir un formage à chaud superplastique et un soudage par diffusion.

3. Procédé selon la revendication 2, **caractérisé en ce que** la paroi (32) du canal est en alliage de titane.

4. Procédé selon l'une quelconque des revendications précédentes, **caractérisé en ce qu'**il consiste à prévoir au niveau d'au moins une face de la structure alvéolaire au moins une découpe (50) avec une forme en contre dépouille pour recevoir le canal (30).

5. Procédé selon l'une quelconque des revendications précédentes, **caractérisé en ce que** le canal (30) est délimité par une paroi (32) avec une forme en creux solidarisée avec la couche acoustiquement résistive (24) ou la couche réflectrice (28).

6. Procédé selon la revendication 5, **caractérisé en ce qu'**il consiste à former le canal en assemblant la paroi (32) et la couche acoustiquement résistive (24) ou la couche réflectrice (28), à réaliser une découpe (50) au niveau d'une face de la structure alvéolaire (26), à assembler l'ensemble canal/couche acoustiquement résistive (24) ou couche réflectrice (28) avec la structure alvéolaire en élevant la température de la couche acoustiquement résistive (24) ou la couche réflectrice (28) et en exerçant simultanément un effort de pression visant à plaquer la couche acoustiquement résistive (24) ou la couche réflectrice (28) contre la face de la structure alvéolaire (26).

7. Procédé selon la revendication 5 ou 6, **caractérisé en ce qu'**il consiste à déformer une couche (34) afin d'obtenir au niveau d'une de ses faces des sillons (36), à plaquer et solidariser ladite couche (34) déformée à la couche acoustiquement résistive de manière à délimiter les canaux (30) et à effectuer un retrait de matière de manière à supprimer entre les canaux (30) la couche (34) dans laquelle sont formés les sillons (36), préalablement à l'assemblage de la structure alvéolaire (26).

8. Procédé selon la revendication 7, **caractérisé en ce qu'**il consiste à conserver au niveau de la couche (34) deux pattes (42) sensiblement parallèles à la couche acoustique résistive (24) de part et d'autre des canaux (30).

9. Procédé selon la revendication 8, **caractérisé en ce que** les pattes (42) ont une longueur comprise entre 2 et 10 mm.

10. Procédé selon l'une quelconque des revendications **caractérisé en ce que** le retrait de matière visant à supprimer une partie de la couche (24) est obtenu par jet d'eau.

## Patentansprüche

1. Verfahren zur Herstellung einer Platte für die Schallbehandlung mit einer schalldämpfenden Schicht (24), wenigstens einer Kammerstruktur (26) und einer reflektierenden Schicht (28) ebenso wie mit wenigstens einem Kanal, der wenigstens teilweise durch eine Wand (32) begrenzt ist, die sich mit wenigstens einer Wand einer Kammer der Kammerstruktur (26) schneidet, **dadurch gekennzeichnet, dass** dieses darin besteht, die Temperatur der Wand (32) und von Rändern der Kammern der Kammerstruktur (26) zu erhöhen und Gas unter Druck in den Kanal (30) einzuführen, um die Wand (32) des Kanals zu erweitern, um diese gegen die Ränder der Kammer der Kammerstruktur (26) derart zu drücken, dass eine kontinuierliche Diffusionsverschweißung zwischen den Rändern der Wände der Kammern der Kammerstruktur (26) und der Wand (32) des Kanals (30) erhalten wird.

2. Verfahren nach Anspruch 1, **dadurch gekennzeichnet, dass** die Wand (32) aus einem Material ist, das in Bezug auf Superplastizität rheologische Eigenschaften aufweist, die sich dazu eignen, eine warme superplastische Formgebung und eine Diffusionsverschweißung auszuführen.

3. Verfahren nach Anspruch 2, **dadurch gekennzeichnet, dass** die Wand (32) des Kanals aus einer Titanlegierung ist.

4. Verfahren nach einem der vorhergehenden Ansprüche, **dadurch gekennzeichnet, dass** dieses darin besteht, im Bereich wenigstens einer Stirnseite der Kammerstruktur wenigstens eine schwalbenschwanzförmige Aussparung (50) für die Aufnahme des Kanals (30) vorzusehen.

5. Verfahren nach einem der vorhergehenden Ansprüche, **dadurch gekennzeichnet, dass** der Kanal (30) von einer einen Hohlraum bildenden Wand (32) begrenzt ist, die mit der schalldämpfenden Schicht (24) oder der reflektierenden Schicht (28) verbunden ist.

6. Verfahren nach Anspruch 5, **dadurch gekennzeichnet, dass** dieses darin besteht, dass der Kanal durch Zusammenfügen der Wand (32) und der schalldämpfenden Schicht (24) oder der reflektierenden Schicht (28) gebildet wird, dass eine Aussparung (50) im Bereich einer Stirnfläche der Kammerstruktur (26) bewerkstelligt wird und dass die Einheit Kanal/schalldämpfende Schicht (24) oder reflektierende Schicht (28) mit der Kammerstruktur zusammengefügt wird, indem die Temperatur der schalldämpfenden Schicht (24) oder der reflektierenden Schicht (28) erhöht wird und indem gleichzeitig eine Druckkraft ausgeübt wird, die darauf abzielt, die schalldämpfende Schicht (24) oder die reflektierende Schicht (28) gegen die Stirnseite der Kammerstruktur (26) zu drücken.

7. Verfahren nach Anspruch 5 oder 6, **dadurch gekennzeichnet, dass** dieses darin besteht, dass eine Schicht (34) verformt wird, um im Bereich einer seiner Seiten Rillen (36) zu erhalten, dass die verformte Schicht (34) zur Begrenzung der Kanäle (30) mit der schalldämpfenden Schicht in Kontakt gebracht und verbunden wird, und dass eine Materialschwächung ausgeführt wird, um zwischen den Kanälen (30) die Schicht (34), in der die Rillen (36) ausgebildet sind, zu entfernen, vorzugsweise beim Zusammenbau der Kammerstruktur (26).

8. Verfahren nach Anspruch 7, **dadurch gekennzeichnet, dass** dieses darin besteht, im Bereich der Schicht (34) zwei Laschen (42) beizubehalten, die beidseits der Kanäle (30) im Wesentlichen parallel zu der schalldämpfenden Schicht (24) verlaufen.

9. Verfahren nach Anspruch 8, **dadurch gekennzeichnet, dass** die Laschen (42) eine Länge zwischen 2 und 10 mm aufweist.

10. Verfahren nach einem der vorhergehenden Ansprüche, **dadurch gekennzeichnet, dass** die auf die Entfernung eines Teils der Schicht (24) abzielende Materialschwächung durch Wasserstrahl erhalten wird.

## Claims

1. Process for the production of an acoustic treatment panel that comprises an acoustically resistive layer (24), at least one alveolar structure (26), and a reflective layer (28), as well as at least one channel that is bordered at least in part by a wall (32) that is secant with at least one wall of a cell of the alveolar structure (26), **characterized in that** it consists in elevating the temperature of the wall (32) and the ends of the cells of the alveolar structure (26) and in injecting a pressurized gas into the channel (30) so as to expand the wall (32) of the channel so as to flatten it against the ends of the cells of the alveolar structure (26) in such a way as to produce a weld by continuous diffusion between the ends of the walls of the cells of the alveolar structure (26) and the wall (32) of the channel (30).

2. Process according to Claim 1, wherein the wall (32) is made of a material that has rheological characteristics relative to the superplasticity that are suitable for undergoing superplastic hot-shaping and diffusion welding.

3. Process according to Claim 2, wherein the wall (32) of the channel is made of a titanium alloy.

4. Process according to any of the preceding claims, wherein it consists in providing at least one cut-out (50) with an undercut shape for accommodating the channel (30) at at least one surface of the alveolar structure.

5. Process according to any of the preceding claims, wherein the channel (30) is bordered by a wall (32) with a hollow shape that is made integral with the acoustically resistive layer (24) or the reflective layer (28).

6. Process according to Claim 5, wherein it consists in forming the channel by assembling the wall (32) and the acoustically resistive layer (24) or the reflective layer (28), in making a cut-out (50) at a surface of the alveolar structure (26), in assembling the unit of the channel/acoustically resistive layer (24) or reflective layer (28) with the alveolar structure by raising the temperature of the acoustically resistive layer (24) or the reflective layer (28), and by simultaneously exerting a pressurized force whose purpose is to flatten the acoustically resistive layer (24) or the reflective layer (28) against the surface of the alveolar structure (26).

7. Process according to Claim 5 or 6, wherein it consists in deforming a layer (34) so as to produce - at one of its surfaces - furrows (36), in flattening and making integral said deformed layer (34) with the acoustically resistive layer in such a way as to border the channels (30), and in carrying out a removal of material in such a way as to eliminate - between the channels (30) - the layer (34) in which the furrows (36) are formed, prior to the assembly of the alveolar structure (26).

8. Process according to Claim 7, wherein it consists in preserving two lugs (42) at the layer (34) that are essentially parallel to the acoustically resistive layer (24) on either side of the channels (30).

9. Process according to Claim 8, wherein the lugs (42) have a length of between 2 and 10 mm.

10. Process according to any of the claims, wherein the removal of material whose purpose is to eliminate a portion of the layer (24) is done by water jet.
